(19) Europäisches Patentamt

European Patent Office

Office européen des brevets

(11) Veröffentlichungsnummer: **0 356 832 B1**

(12) **EUROPÄISCHE PATENTSCHRIFT**

(45) Veröffentlichungstag der Patentschrift: **02.12.92**

(21) Anmeldenummer: **89115233.2**

(22) Anmeldetag: **18.08.89**

(51) Int. Cl.⁵: **B01D 36/00**, B01D 35/143, B01D 27/04, F02M 37/22

(54) **Kraftstoff-Filter.**

(30) Priorität: **29.08.88 DE 3829190**

(43) Veröffentlichungstag der Anmeldung:
**07.03.90 Patentblatt 90/10**

(45) Bekanntmachung des Hinweises auf die
Patenterteilung:
**02.12.92 Patentblatt 92/49**

(84) Benannte Vertragsstaaten:
**DE ES FR GB IT SE**

(56) Entgegenhaltungen:
**WO-A-85/01673**
**GB-A- 1 063 000**
**US-A- 4 592 836**

(73) Patentinhaber: **KNECHT FILTERWERKE GMBH**
**Pragstrasse 54**
**W-7000 Stuttgart 50(DE)**

(72) Erfinder: **Gebert, Hans**
**Eppingerstrasse 64**
**W-7100 Heilbronn-Böckingen(DE)**
Erfinder: **Möhle, Rolf**
**Weinsbergerstrasse 8**
**W-7117 Bretzfeld-Schappach(DE)**
Erfinder: **Müller, Hubert**
**Nägelesäcker 53**
**W-7000 Stuttgart 60(DE)**

(74) Vertreter: **Pfusch, Volker, Dipl.-Ing.**
**MAHLE GMBH Patentabteilung Pragstrasse**
**26-46 Postfach 50 07 69**
**W-7000 Stuttgart 50(DE)**

EP 0 356 832 B1

## Beschreibung

Die Erfindung betrifft ein Kraftstoff-Filter, insbesondere für Dieselkrafstoff, mit einem im Einbaulage unten liegenden Sammelraum für abgeschiedenes Wasser.

Ein solches Kraftstoff-Filter ist beispielsweise aus WO-A-85/01673 bekannt. Bei der Filterpatrone nach diesem Stand der Technik wird der für die Wasserstandskontrolle maßgebende elektrische Pol durch eine das gefaltete Papier dieser Patrone tragende rohrförmige Zarge im Zusammenspiel mit einer Endscheibe des Filtereinsatzes gebildet. Die Zarge und die betreffende Endscheibe müssen daher elektrisch leitfähig sein. Der Filtereinsatz selbst muß dagegen isoliert in dem den Gegenpol darstellenden Filtergehäuse gelagert sein. Die erforderlichen Isolierungszwischenstücke verkomplizieren den Filteraufbau.

Hiervon ausgehend liegt der Erfindung die Aufgabe zugrunde, einen konstruktiv einfacher aufgebauten Kraftstoff-Filter zu schaffen.

Gelöst wird diese Aufgabe durch eine Ausführung des Kraftstoff-Filters nach dem Anspruch 1.

Zweckmäßige Ausgestaltungen der Erfindung sind Gegenstand der Unteransprüche.

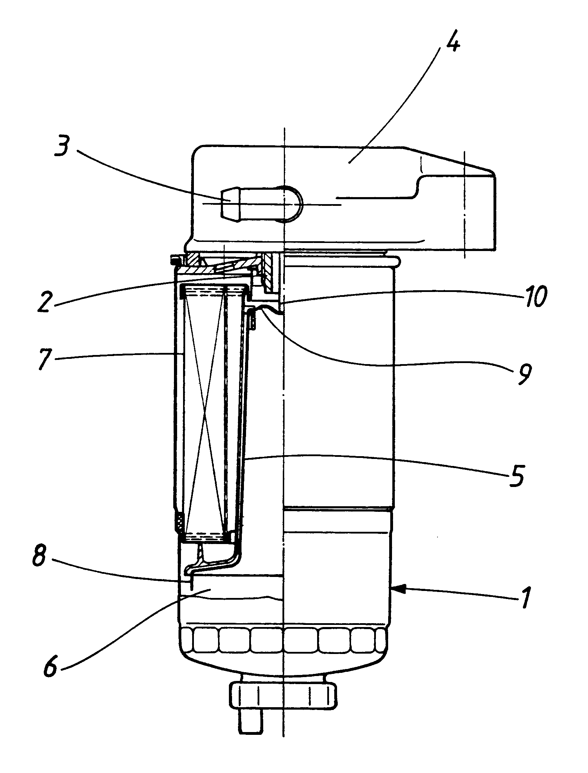

Ein Ausführungsbeispiel der Erfindung ist in der Zeichnung dargestellt, die eine Kraftstoff-Filterpatrone halb im Schnitt, halb in der Ansicht zeigt.

Die Kraftstoff-Filterpatrone 1 ist über ein Schraubgewinde 2 an einen mit der Kraftstoffleitung 3 verbundenen Filterkopf 4 angeschraubt. Innerhalb der Filterpatrone 1 führt ein Metallstreifen 5 aus dem Gebiet der Schraubgewinde 2-Verbindung in denjenigen Raum 6, in dem beim Filtern des Kraftstoffs in dem Filterelement 7 abgetrenntes Wasser anfällt. Das in diesen Raum mündende Ende des Metallstreifens 5 dient als elektrischer Fühler 8. Der Fühler 8 mit dem Metallstreifen 5 ist an einem flüssigkeitsleitenden Einsatz aus elektrisch nicht leitendem Kunststoff, der radial innerhalb des Filterelementes 7 angebracht ist, fixiert und so gegen das Filtergehäuse isoliert. Der Fühler 8 ist an eine Stromquelle angeschlossen, während das metallische Gehäuse der Filterpatrone mit Masse verbunden ist. Die Verbindung mit Masse erfolgt über die metallische Schraubgewinde 2-Verbindung. Bei einem an den Fühler 8 von unten reichenden Wasserstand fließt zwischen dem Fühler 8 und der Gehäusewand der Filterpatrone 1 elektrischer Strom. Dieser kann dazu benutzt werden, eine Anzeige auszulösen.

Die Stromquelle sowie die Einrichtungen zur Feststellung, ob Strom über den Fühler 8 fließt, sind in dem Filterkopf 4 angebracht. Der mit der Stromquelle in dem Filterkopf 4 elektrisch verbindbare Fühler 8 besitzt einen federnden Kontakt 9, der sich beim Anschrauben der Filterpatrone 1 an den Filterkopf 4 an einen fest mit der Stromquelle verbundenen Kontaktstift 10 so anlegt, daß elektrischer Strom fließen kann. Der besondere Vorteil dieser erfindungsgemäßen Ausführung besteht darin, daß der elektrische Anschluß des Fühlers 8 an die fest mit der Kraftstoffleitung verbundene Stromquelle beim Anschrauben der Filterpatrone automatisch erfolgt. Im Gegensatz zum vorbekannten Stand der Technik ist es hierbei nicht mehr erforderlich, irgendwelche Leitungen getrennt von Hand zu koppeln. Ein weiterer Vorteil besteht darin, daß auch keine störenden losen Leitungen mehr von der Filterpatrone zu der entfernt liegenden Stromquelle vorhanden sind.

## Patentansprüche

1. Kraftstoff-Filter (1), insbesondere für Dieselkraftstoff, mit einem in Einbaulage unten liegenden Sammelraum (6) für abgeschiedenes Wasser, bei dem

   a) ein elektrisch gepolter in den Sammelraum ragender Fühler (8) bei einer bestimmten Wasserstandshöhe von dem Wasser kontaktiert und dadurch ein durch das Wasser verlaufender von einem außerhalb des Kraftstoff-Filters (1) gespeister Stromkreis geschlossen wird, wobei das Kraftstoff-Filter (1) mit einem Schnell- oder Drehverschluß an eine Kraftstoffleitung (3) anschließbar ist, die fest mit der den Stromkreis versorgenden Stromquelle verbunden ist und wobei der Fühler (8) das Ende eines leitfähigen Drahtes oder Metallstreifens (5) ist.

   b) die elektrische Verbindung zu der Stromquelle durch beim Anschließen des Kraftstoff-Filters (1) an die Kraftstoffleitung (3) selbsttätig schließende Kontakte (2; 9, 10) gegeben ist, von denen der über ein Schraubgewinde (2) erfolgende Kontakt das elektrisch leitfähige Gehäuse über die elektrisch leitfähige Kraftstoffleitung (3) mit dem einen Pol der Stromquelle verbindet und von denen ein federnder Kontakt (9) des Fühlers (8) den Fühler (8) über den an der Kraftstoffleitung (3) isoliert befestigten Kontaktstift (10) mit dem Gegenpol der Stromquelle verbindet,

   c) die mit dem in dem Kraftstoff-Filter (1) angesammelten Wasser in Kontakt bringbaren Pole der Fühler (8) und das Gehäuse des Kraftstoff-Filters (1) sind.

2. Kraftstoff-Filter nach einem der vorhergehenden Ansprüche,
   dadurch **gekennzeichnet**
   daß der Fühler (8) mit einer Zuleitung (Metallstreifen 5) an elektrisch nicht leitenden Bereichen des in dem Kraftstoff-Filter eingesetzten Filterelementes (7) befestigt ist.

3. Kraftstoff-Filter nach Anspruch 1 oder 2 dadurch **gekennzeichnet,** daß das Filterelement (7) radial innen mit einem flüssigkeitsleitenden Einsatz aus elektrisch nicht leitendem Kunstoff versehen ist, an dem der Fühler (8) mit seiner Zuleitung zur elektrischen Isolierung gegenüber dem Filtergehäuse fixiert ist.

## Claims

1. Fuel filter (1), in particular for diesel fuel, with a collecting chamber (6), located at the bottom when installed, for separated water in which
(a) an electrically polarised feeler (8) projecting into the collecting chamber is contacted by the water at a specific water level and a circuit extending through the water and supplied by a ... outside the fuel filter (1) is thus closed, wherein the fuel filter (1) may be attached by a rapid-action or rotary closure means to a fuel line (3) which is rigidly connected to the current source supplying the circuit and wherein the feeler (8) is the end of a conductive wire or metal strip (5),
(b) the electrical connection to the current source is provided by contacts (2; 9, 10) which automatically close when the fuel filter (1) is attached to the fuel line (3) and of which the contact produced via a screw thread (2) connects the electrically conductive housing via the electrically conductive fuel line (3) to one pole of the current source and of which a resilient contact (9) of the feeler (8) connects the feeler (8) via the contact pin (10) fastened in an insulated manner on the fuel line (3) to the opposing pole of the current source,
(c) the poles which may be brought into contact with the water which has accumulated in the fuel filter (1) are the feeler (8) and the housing of the fuel filter (1).

2. Fuel filter according to one of the preceding claims, characterised in that the feeler (8) with a supply line (metal strip 5) is fastened onto electrically non-conductive regions of the filter element (7) inserted in the fuel filter.

3. Fuel filter according to claim 1 or 2, characterised in that the filter element (7) is provided with a radially internal liquid-conveying insert of electrically non-conductive plastics material on which the feeler (8) with its supply line is fixed for electrical insulation from the filter housing.

## Revendications

1. Filtre à carburants (1), en particulier pour carburant Diesel, avec une enceinte collectrice (6), placée en position basse une fois le filtre monté, pour l'eau s'étant séparée, dans lequel
a) un capteur (8), présentant des pôles électriques et pénétrant dans l'enceinte collectrice est mis en contact par l'eau lorsqu'elle atteint un niveau déterminé et produisant de ce fait la fermeture d'un circuit électrique passant par l'eau et alimenté depuis l'extérieur du filtre à carburant (1), le filtre à carburant (1) étant susceptible d'être raccordé à un obturateur rapide ou tournant monté sur une conduite de carburant (3), reliée rigidement à la source électrique qui alimente le circuit électrique, et où le capteur (8) est constitué par l'extrémité d'un fil métallique conducteur ou d'une bande métallique conductrice (5),
b) la liaison électrique à la source électrique est assurée par des contacts (2;9,10), qui se ferment automatiquement lors du raccordement du filtre à carburant (1) à la conduite de carburant (3) et dont le contact s'effectuant par l'intermédiaire d'un filetage (2) relie le boîtier conducteur de l'électricité, par l'intermédiaire de la conduite de carburant (3), conductrice de l'électricité, à un pôle de la source électrique et dont un contact élastique (9) du capteur (8) relie le capteur (8), par l'intermédiaire de la tige de contact (10), fixée et isolée sur la conduite de carburant (3), au contre-pôle de la source électrique,
c) les pôles susceptibles de venir au contact de l'eau accumulée dans le filtre à carburant (1) sont constitués par le capteur 8 et le boîtier du filtre à carburant (1).

2. Filtre à carburant selon la revendication 1, caractérisé en ce que le capteur (8) est fixé à une conduite d'amenée (bande métallique 5), sur des zones non conductrices de l'électricité de l'élément de filtre (7) utilisé dans le filtre à carburant.

3. Filtre à carburant selon la revendication 1 ou 2, caractérisé en ce que l'élément de filtre (7) est pourvu radialement d'une garniture conductrice de liquides, en matière synthétique non conductrice de l'électricité, sur laquelle le capteur (8) est fixé avec sa conduite d'amenée, en vue d'assurer une isolation électrique par rapport au carter de filtre.